# DEMANDE DE BREVET EUROPEEN

(11) **EP 1 820 716 A1**
(43) Date de publication de la demande: **22.08.2007**
(21) Numéro de dépôt: 07100129.1
(22) Date de dépôt: 04.01.2007
(51) Int. Cl.: B62D 25/08, B62D 25/20, B60R 5/04

(54) **Structure de coffre arrière d'un véhicule automobile et véhicule automobile comportant une telle structure**

(30) Priorité: 15.02.2006 FR 0601337
(71) Demandeur: PEUGEOT CITROËN AUTOMOBILES S.A., 78140 Velizy Villacoublay (FR)
(72) Inventeur: Schmitt, Jean-Charles, 90000 Belfort (FR)

(57) **Abrégé**

La structure de coffre arrière comprend deux longerons (14) formés chacun d'une enveloppe tubulaire de section sensiblement rectangulaire, une traverse (16) formée d'une enveloppe tubulaire de section sensiblement rectangulaire reliant l'avant des deux longerons (14), un plateau de chargement (18) s'étendant dans l'espace délimité par les longerons (14) et la traverse (16), et solidaire de ces derniers, un plateau de support (22) de sièges arrière situé à l'avant de la traverse (16) et une surface de jonction (24), joignant l'avant du plateau de chargement (18) à l'arrière du plateau de support (22).

L'enveloppe de la traverse (16) comporte une paroi supérieure (26A) distincte de la surface de jonction (24), et la surface de jonction (24) passe sous la paroi supérieure (26A) de l'enveloppe de la traverse (16).

## Description

La présente invention concerne une structure de coffre arrière d'un véhicule automobile, ainsi qu'un véhicule automobile comportant une telle structure.

Il est connu de l'état de la technique une structure de coffre arrière d'un véhicule automobile, du type comprenant :
- deux longerons formés chacun d'une enveloppe tubulaire de section sensiblement rectangulaire,
- une traverse formée d'une enveloppe tubulaire de section sensiblement rectangulaire reliant l'avant des deux longerons,
- un plateau de chargement s'étendant dans l'espace délimité par les longerons et la traverse, et solidaire de ces derniers,
- un plateau de support de sièges arrière situé à l'avant de la traverse,
- une surface de jonction, joignant l'avant du plateau de chargement à l'arrière du plateau de support.

Dans cette structure, l'enveloppe de la traverse comporte une paroi supérieure formée par la surface de jonction et le plateau de support se situe à une hauteur inférieure à celle de la traverse. La surface de jonction définit, à l'avant de la traverse, une rampe inclinée vers le plateau de support démarrant depuis le haut de la traverse.

En cas de choc à l'arrière du véhicule, l'énergie est dissipée par le plateau de chargement et l'effort transmis au plateau de support de sièges arrière par la surface de jonction.

Or, la rampe offre une résistance à un effort horizontal d'autant plus faible que la différence de hauteur entre les plateaux est grande. Ainsi, le plateau de chargement risque d'avancer vers l'avant et de chevaucher le plateau de support. Dans ce cas, il y a une intrusion dans l'habitacle, ce qu'il faut éviter pour assurer la sécurité des passagers du véhicule automobile.

L'invention a pour but de pallier ce problème, en proposant une structure de coffre arrière réduisant le risque d'une telle intrusion.

A cet effet, l'invention a pour objet une structure de coffre arrière d'un véhicule automobile du type précité, caractérisée en ce que l'enveloppe de la traverse comporte une paroi supérieure distincte de la surface de jonction, et en ce que la surface de jonction passe sous la paroi supérieure de l'enveloppe de la traverse.

Grâce à l'invention, la différence de hauteur entre les deux plateaux est diminuée, ce qui entraîne une augmentation de résistance aux efforts horizontaux appliqués sur la surface de jonction.

Une structure de coffre arrière selon l'invention peut en outre comporter l'une ou plusieurs des caractéristiques suivantes :
- le plateau de support se situe à une hauteur inférieure de celle du plateau de chargement, et la surface de jonction définit, à l'avant de la traverse, une rampe inclinée vers le plateau de support ;
- le plateau de support se situe à la même hauteur que le plateau de chargement ;
- la surface de jonction forme en partie l'enveloppe de la traverse ;
- l'enveloppe de la traverse comporte une paroi inférieure formée par la surface de jonction ;
- la surface de jonction traverse d'avant en arrière l'enveloppe tubulaire de la traverse ;
- le plateau de chargement se situe à la même hauteur que la surface de jonction ;
- l'enveloppe de chaque longeron comporte une feuille longitudinale formant une paroi inférieure de l'enveloppe du longeron et définissant un rebord latéral intérieur sur lequel le plateau de chargement s'appuie ;
- la feuille est pliée de son côté intérieur de manière à former une marche longitudinale ascendante définissant, d'une part, une paroi verticale constituant en partie une paroi verticale de l'enveloppe du longeron et, d'autre part, un palier supérieur constituant le rebord d'appuis du plateau de chargement ;
- la structure comprend des bords latéraux prolongeant le plateau de chargement de chaque coté, chaque bord latéral complétant la feuille d'enveloppe du longeron respectif pour former au moins en partie cette enveloppe ; et
- chaque bord latéral forme une paroi supérieure de l'enveloppe du longeron respectif.

L'invention a également pour objet un véhicule automobile comportant une telle structure de coffre arrière.

L'invention sera mieux comprise à la lecture de la description qui va suivre, donnée uniquement à titre d'exemple et faite en se référant aux dessins annexés, sur lesquels :
- la figure 1 est une vue en perspective d'une moitié arrière gauche d'une structure de coffre arrière de véhicule automobile selon un premier mode de réalisation de l'invention,
- la figure 2 est une vue similaire à celle de la figure 1 présentant un deuxième mode de réalisation de l'invention, et
- la figure 3 est une vue similaire à celle de la figure 1 présentant un troisième mode de réalisation de l'invention.

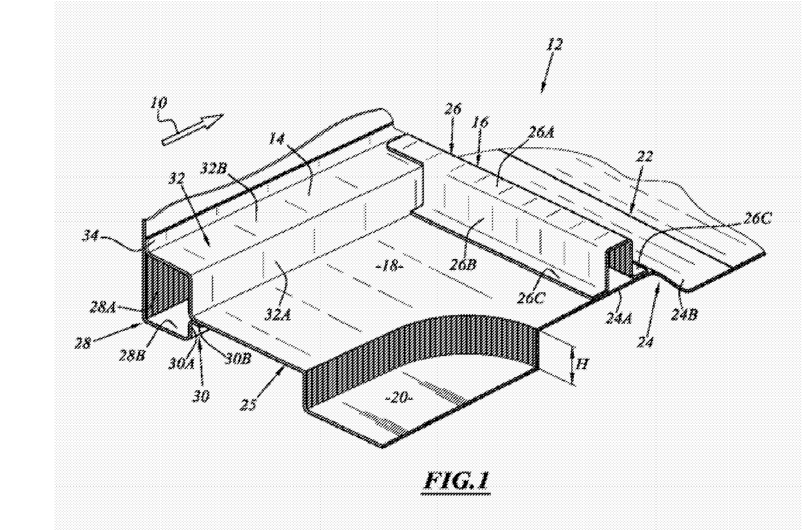

Sur la figure 1, une flèche 10 indique la direction arrière-avant d'un véhicule automobile. Dans la suite de la description, les adjectifs d'orientation avant, arrière, etc., font référence à cette direction 10.

La structure de coffre arrière 12 représentée comprend deux longerons 14 s'étendant parallèlement le long de la direction du véhicule 10. Seul le longeron gauche est représenté. Le longeron droit, non représenté, est symétrique.

La structure 12 comprend également une traverse 16 reliant l'avant des deux longerons 14.

Les longerons 14 et la traverse 16 sont chacun formés d'une enveloppe tubulaire de section sensiblement rectangulaire.

Un plateau de chargement de coffre 18 s'étend horizontalement dans l'espace délimité par les longerons 14 et la traverse 16.

Le plateau de chargement 18 définit un renfoncement vertical en forme de cuvette 20 de hauteur H et ouverte à sa portion arrière, pour recevoir une roue de secours (non représentée).

Par ailleurs, la structure 12 comprend un plateau de support 22 de sièges arrière situé à l'avant de la traverse 16 dans la direction 10, c'est-à-dire de l'autre côté de cette traverse 16 par rapport au plateau de chargement 18, à une hauteur inférieure à celle du plateau de chargement 18. En variante (non représentée), il se situe à la même hauteur que le plateau de chargement 18.

Une surface de jonction 24 joint l'avant du plateau de chargement 18 à l'arrière du plateau de support 22. La surface de jonction 24 comporte une première partie 24A horizontale s'étendant dans la continuité du plateau de chargement 18 et une seconde partie 24B en forme de rampe inclinée depuis la première partie 24A vers le plateau de support 22.

Le plateau de chargement 18, la surface de jonction 24 et une partie du plateau de support 22 sont réalisés d'un seul tenant par une même feuille de tôle, dite feuille de coffre arrière 25.

La traverse 16 comporte une feuille de tôle supérieure 26 pliée pour former un profil général en Ω. Cette feuille 26 définit ainsi une paroi supérieure d'enveloppe 26A, deux parois verticales avant et arrière 26B, et deux rebords horizontaux inférieurs 26C. Les rebords horizontaux inférieurs 26C sont rapportés sur la partie horizontale 24A de la surface de jonction 24. Ainsi, cette partie horizontale 24A complète la feuille 26 en formant une paroi inférieure de l'enveloppe de la traverse 16.

L'enveloppe de chaque longeron 14 comporte une feuille de tôle longitudinale 28 pliée longitudinalement de manière à former un profil général en L. Cette feuille 26 définit ainsi une paroi externe 28A et une paroi inférieure 28B. Elle comporte un bord longitudinal intérieur (bord de la paroi inférieure 28B) pliée de manière à former une marche longitudinale ascendante 30, définissant, d'une part, une paroi verticale 30A formant en partie une paroi verticale de l'enveloppe du longeron 14 et, d'autre part, un palier supérieur 30B constituant un rebord sur lequel le plateau de chargement 18 s'appuie sur toute sa longueur.

La feuille de coffre arrière 25 comporte des bords latéraux 32 prolongeant le plateau de chargement 18 de chaque côté. Les bords latéraux 32 sont pliés en forme de marche ascendante dirigée vers l'extérieur de manière à compléter chacun la feuille d'enveloppe 28 du longeron respective pour former son enveloppe. Ainsi, chaque bord latéral 32 définit une paroi verticale 32A qui complète la paroi verticale 30A de la marche 30. Il définit également une paroi horizontale supérieure 32B (palier de la marche) rapportée perpendiculairement sur la paroi verticale 28A de la feuille de longeron 28. La paroi horizontale 32B comporte un rebord extérieur 34 incliné vers le haut rapporté sur la paroi verticale 28A.

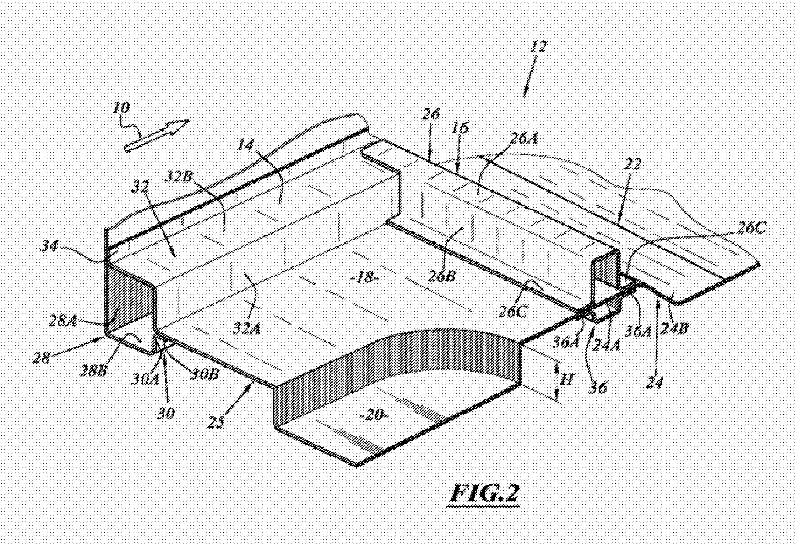

Le mode de réalisation de l'invention représenté sur la figure 2 se distingue de celui de la figure 1 en ce que l'enveloppe de la traverse 16 formée par la feuille de tôle supérieure 26 en Ω, est complétée par une feuille de tôle inférieure 36, en Ω retourné. Cette feuille inférieure 36 définit donc également des rebords horizontaux 36A fixés en vis-à-vis des rebords horizontaux 26C de la feuille de traverse supérieure 26 sur le dessous de la partie horizontale 24A de la surface de jonction 24. Ainsi, cette dernière traverse d'avant en arrière l'enveloppe tubulaire de la traverse 16 formée par les deux feuilles 26, 36.

Par ailleurs, le positionnement du plateau de chargement 18 sur le coté des longerons 14, et de préférence dans la partie basse de leur paroi verticale 32A, 30A, permet de diminuer la hauteur H de la cuvette 20. Ceci a pour effet avantageux de limiter l'encaissement de la roue de secours dans la cuvette 20. La roue de secours peut ainsi s'extraire facilement de la cuvette 20 par le haut en cas de choc arrière et éviter de heurter divers organes du véhicule situés devant la cuvette, qui risqueraient à leur tour de venir heurter un réservoir à carburant, du véhicule automobile situé devant les organes.

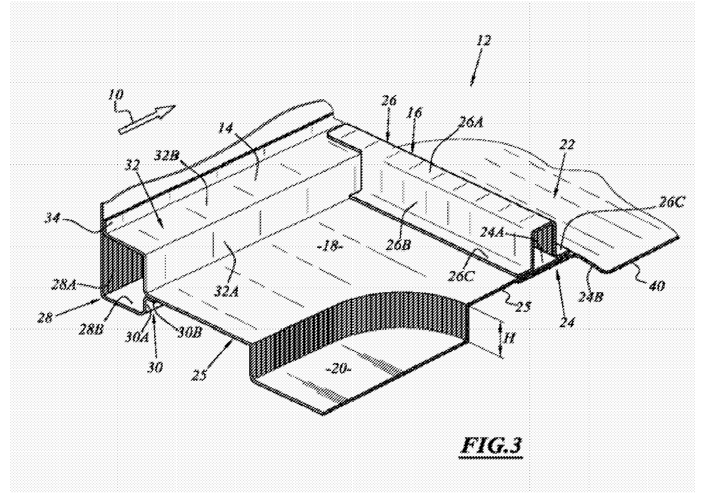

En variante représentée sur la figure 3, la feuille de coffre arrière 25 forme le plateau de chargement 18 et la partie horizontale 24A de la surface de jonction 24. Une feuille d'habitacle 40 complète la feuille de coffre 25 en s'étendant sous la partie horizontale 24A de la surface de jonction 24 et vers l'avant pour former la rampe 24B et le plateau de support 22. Ainsi, la feuille de coffre 25 est enserrée entre la feuille de tôle supérieure 26 de la traverse 16 et la feuille d'habitacle 40.

La structure de coffre arrière selon l'invention permet d'assurer une hauteur de plateau de support 22 la plus basse possible et un seuil de chargement du coffre bas, tout en garantissant une symétrie de la structure arrière favorisant l'absorption des chocs.

Il apparaît clairement d'après la description précédente que l'invention permet de concevoir une structure de coffre arrière 12 avec une rampe de jonction 24 de hauteur faible, voire nulle, susceptible de bien résister à un effort horizontal résultant d'un choc arrière.

## Revendications

1. Structure de coffre arrière d'un véhicule automobile, du type comprenant :
- deux longerons (14) formés chacun d'une enveloppe tubulaire de section sensiblement rectangulaire,
- une traverse (16) formée d'une enveloppe reliant l'avant des deux longerons (14), la traverse comprenant une feuille de tôle supérieure (26) pliée de manière à définir une paroi supérieure d'enveloppe (26A), ainsi que des parois verticales (26B) et des rebords horizontaux inférieurs (26C)
- un plateau de chargement (18) s'étendant dans l'espace délimité par les longerons (14) et la traverse (16), et solidaire de ces derniers,
- un plateau de support (22) de sièges arrière situé à l'avant de la traverse (16),
- une surface de jonction (24), joignant l'avant du plateau de chargement (18) à l'arrière du plateau de support (22)et passant sous la paroi supérieure (26A) de l'enveloppe de la traverse (16),
- l'enveloppe de la traverse (16) comporte une paroi supérieure (26A) distincte de la surface de jonction (24) laquelle comprend une première partie (24A) horizontale et une seconde partie (24B) en forme de rampe inclinée, l'enveloppe de la traverse étant disposé au droit de ladite première partie,
**caractérisée en ce que** la feuille de tôle supérieure (26) est rapportées sur la partie horizontale (24A) de la surface de jonction (24) de sorte à former avec cette dernière une traverse formée d'une enveloppe tubulaire de section sensiblement rectangulaire.

2. Structure de coffre arrière selon la revendication 1, **caractérisée en ce que** les rebords horizontaux inférieurs (26C) sont rapportés sur la partie horizontale (24A) de la surface de jonction (24).

3. Structure de coffre arrière selon la revendication 1 ou 2, **caractérisée en ce que** le plateau de support (22) se situe à une hauteur inférieure de celle du plateau de chargement (18), et **en ce que** la surface de jonction (24) définit, à l'avant de la traverse (16), une rampe (24B) inclinée vers le plateau de support (22).

4. Structure de coffre arrière selon l'une quelconque des revendications 1 à 3, **caractérisée en ce que** le plateau de chargement (18) se situe à la même hauteur que la surface de jonction (24)

5. Structure de coffre arrière selon l'une quelconque des revendications 1 à 4 , **caractérisée en ce que** l'enveloppe de chaque longeron (14) comporte une feuille longitudinale (28) formant une paroi inférieure (28B) de l'enveloppe du longeron (14) et définissant un rebord latéral intérieur (30B) sur lequel le plateau de chargement (18) s'appuie.

6. Structure de coffre arrière selon la revendication 5, **caractérisée en ce que** la feuille (28) est pliée de son côté intérieur de manière à former une marche longitudinale ascendante définissant, d'une part, une paroi verticale (30A) constituant en partie une paroi verticale de l'enveloppe du longeron et, d'autre part, un palier supérieur (30B) constituant le rebord d'appuis du plateau de chargement (18).

7. Structure arrière selon la revendication 5 ou 6 , **caractérisée en ce qu'**elle comprend des bords latéraux (32) prolongeant le plateau de chargement (18) de chaque coté, chaque bord latéral (32) complétant la feuille d'enveloppe (28) du longeron respectif (14) pour former au moins en partie cette enveloppe.

8. Structure arrière selon la revendication 7, **caractérisée en ce que** chaque bord latéral (32) forme une paroi supérieure (32B) de l'enveloppe du longeron respectif (14).

9. Véhicule automobile, **caractérisé en ce qu'**il comporte une structure arrière selon l'une quelconque des revendications précédentes.
